# EUROPÄISCHE PATENTSCHRIFT

(11) **EP 3 705 961 B1**
(45) Veröffentlichungstag und Bekanntmachung des Hinweises auf die Patenterteilung: **26.10.2022**
(21) Anmeldenummer: 19160945.2
(22) Anmeldetag: 06.03.2019
(51) Int. Cl.: G05B 19/418

(54) **COMPUTERIMPLEMENTIERTES VERFAHREN ZUM ÜBERWACHEN VON MEHREREN KABELVERARBEITUNGSMASCHINEN UND ÜBERWACHUNGSSYSTEM**
COMPUTER-IMPLEMENTED METHOD FOR MONITORING A PLURALITY OF CABLE PROCESSING MACHINES AND MONITORING SYSTEM
PROCÉDÉ MIS EN OEUVRE PAR ORDINATEUR PERMETTANT DE SURVEILLER UNE PLURALITÉ DE MACHINES DE TRAITEMENT DE CÂBLES ET SYSTÈME DE SURVEILLANCE

(43) Veröffentlichungstag der Anmeldung: 09.09.2020
(73) Patentinhaber: KOMAX HOLDING AG, 6036 Dierikon (CH)
(72) Erfinder: ROGENMOSER, Daniel, 6275 Ballwil (CH); BRUNNER, Dierk, 6422 Steinen (CH); EMMENEGGER, Daniel, 6047 Kastanienbaum (CH)
(74) Vertreter: Inventio AG

(56) Entgegenhaltungen:
- EP-A1- 1 557 846
- GB-A- 2 283 835
- JP-A- 2016 213 158
- US-A1- 2010 293 493

## Beschreibung

Die vorliegende Erfindung betrifft ein computerimplementiertes Verfahren zum Überwachen von mehreren Kabelverarbeitungsmaschinen und ein Überwachungssystem.

Oftmals wird in einem Unternehmen eine größere Anzahl von Kabelverarbeitungsmaschinen eingesetzt. Diese sind oftmals vom gleichen Typ und werden zur Verarbeitung des gleichen Spektrums des Fertigungsmaterials eingesetzt, dieses umfasst üblicherweise:
- Kabel, gekennzeichnet durch den Kabeltyp (Litzenanzahl, den Leiterquerschnitt, den Außendurchmesser und die Farbe der Isolation), die Länge des Kabels und die Länge der Abisolierungen an den beiden Kabelenden und gegebenenfalls besonderen Verarbeitungen der abisolierten Kabelenden wie Verdrillen, Verzinnen oder Kompaktieren
- Kontaktteile (Crimpkontakte oder Aderendhülsen) an einem oder beiden Kabelenden, gekennzeichnet durch ihren Typ und die Position relativ zum Kabelende
- Dichtungstüllen, gekennzeichnet durch ihren Typ und die Position relativ zum Kabelende

Das fertig konfektionierte bzw. verarbeitetet Kabel, beziehungsweise der zu produzierende Artikel, wird bestimmt durch die Kombination und Verbindung des Fertigungsmaterials mit den gewünschten Merkmalen, also beispielsweise einem Kabel eines bestimmten Typs, welches auf die gewünschte Länge zugeschnitten, beidseitig mit einer bestimmten Länge abisoliert und mit bestimmten Dichtungstüllen und Kontaktteilen, jeweils an den gewünschten Positionen versehen wird. Üblicherweise werden mehrere Lose desselben Artikels als Fertigungsauftrag auf einer Kabelverarbeitungsmaschine produziert und die Kabelverarbeitungsmaschine anschließend für einen anderen Artikel umgerüstet und eingerichtet.

Nicht alle Typen bzw. Arten von Kabelverarbeitungsmaschinen können dieselben Artikel verarbeiten. So können einfachere Kabelverarbeitungsmaschinen nur Kabel ablängen und abisolieren und gewisse Typen bzw. Arten können keine Dichtungstüllen aufbringen.

Für das Einrichten eines Artikels müssen das Fertigungsmaterial und die Artikeldefinition in der lokalen Datenbank der Kabelverarbeitungsmaschine vorhanden sein. Dies kann durch den Benutzer «von Hand» erfolgen oder diese Daten werden durch einen Leitrechner bereitgestellt und zur Kabelverarbeitungsmaschine übertragen.

Neben den Daten, welche den zu produzierenden Artikel bestimmen, müssen an der Kabelverarbeitungsmaschine auch Produktionsparameter definiert werden, welche abhängig von der Art der Kabelverarbeitungsmaschine unterschiedlich sein können. Beispielsweise handelt es ich dabei um:
- Geschwindigkeit und Beschleunigung des Kabelvorschubes
- Einschneidtiefe der Messer beim Abisolieren
- (Schwenk-)Geschwindigkeiten beim Anfahren der Bearbeitungsstationen
- Prozesseinstellungen an den Prozessmodulen (Crimppressen und Tüllenmodulen)
- Parameter für die Einstellung der Qualitätsüberwachungen

Die richtige Einstellung der Produktionsparameter beeinflusst in starkem Maß die Ausbringleistung der Kabelverarbeitungsmaschine und die Qualität der durch die jeweilige Kabelverarbeitungsmaschine produzierten Artikel.

Während die Artikeldefinitionen und die Daten für die Fertigungsauftrage (Artikel, Stückzahl und Losgröße) durch einen Leitrechner bzw. eine Produktionssteuerungssoftware zentral verwaltet und verteilt werden können, erfolgt das Finden und Einstellen der optimalen Produktionsparameter typischerweise lokal an der Kabelverarbeitungsmaschine durch den Bediener bzw. Benutzer. Dies kann als iterativer Prozess während der Produktion erfolgen, indem beispielsweise die Geschwindigkeiten bis zu dem Wert erhöht werden, bei dem die Fertigungsqualität unzulässig abnimmt. Da die Produktionsparameter lokal eingestellt werden, besteht die Gefahr, dass nicht alle Kabelverarbeitungsmaschinen optimal eingestellt sind und sich daraus bei der Produktion desselben Artikels pro Kabelverarbeitungsmaschine unterschiedliche Ausbringleistungen und Fertigungsqualitäten ergeben.

Eine abgenutzte, schlecht eingestellte oder mangelhaft gewartete Kabelverarbeitungsmaschine oder eine Kabelverarbeitungsmaschine, die mechanisch nicht richtig justiert ist, kann unter ungünstigen Umständen im Betrieb oftmals mit einer Fehlermeldung stehen bleiben und dadurch eine schlechte Verfügbarkeit aufweisen. Da die Fehlermeldungen lokal an der einzelnen Kabelverarbeitungsmaschine quittiert werden, ist es nicht ohne weiteres möglich festzustellen, welche Kabelverarbeitungsmaschinen einer Fabrik besonders oft von Stillständen betroffen sind.

Die EP 1 557 846 A1 , US 2010/293493 A1 und JP 2016 213158 A offenbaren ein Kabelproduktionssystem gemäß dem Stand der Technik.

Es kann unter anderem ein Bedarf an einem computerimplementierten Verfahren bzw. einem Überwachungssystem bestehen, mit welchem die oben beschriebenen Mängel behoben werden können und mittels dem die Kabelverarbeitungsmaschinen technisch einfach überwacht werden können.

Einem solchen Bedarf kann durch ein Verfahren bzw. ein Überwachungssystem gemäß dem unabhängigen Anspruch entsprochen werden. Vorteilhafte Ausführungsformen sind in den abhängigen Ansprüchen definiert.

Gemäß einem ersten Aspekt der Erfindung wird ein computerimplementiertes Verfahren zum Überwachen von mehreren Kabelverarbeitungsmaschinen zum Verarbeiten von Kabeln vorgeschlagen, wobei das Verfahren folgende Schritte umfasst: Senden von Produktionsparametern von einer Kabelverarbeitungsmaschine oder mehreren Kabelverarbeitungsmaschinen zu einem Steuerungsserver mit einer zentralen Datenbank, wobei die Produktionsparameter Einstellungen der Kabelverarbeitungsmaschine für die Verarbeitung der Kabel durch die jeweilige Kabelverarbeitungsmaschine umfassen; und Empfangen der Produktionsparameter durch den Steuerungsserver; und Speichern der Produktionsparameter in der zentralen Datenbank.

Vorteilhaft hieran ist, dass typischerweise zentral auf die Produktionsparameter zugegriffen werden kann und diese miteinander verglichen werden können. Zudem können die Produktionsparameter in der Regel technisch einfach und schnell analysiert werden. Auch lassen sich typischerweise Zusammenhänge zwischen den Produktionsparametern und weiteren Eigenschaften (z.B. wie viele Kabel in einer Zeitperiode von der jeweiligen Kabelverarbeitungsmaschine verarbeitet werden) bzw. Einstellungen der jeweiligen Kabelverarbeitungsmaschine bzw. Kabelverarbeitungsmaschinen technisch einfach feststellen. Auch ist es hierdurch im Allgemeinen möglich, dass schnell ein Überblick über die Fertigungsdaten der Kabelverarbeitungsmaschinen gewonnen wird. Dies erhöht die Effizienz des Betriebs der Kabelverarbeitungsmaschinen.

Gemäß einem zweiten Aspekt der Erfindung wird ein Überwachungssystem zum Überwachen von mehreren Kabelverarbeitungsmaschinen vorgeschlagen, wobei das Überwachungssystem folgendes umfasst: mehrere Kabelverarbeitungsmaschinen zum Verarbeiten von Kabeln, und einen Steuerungsserver zum Steuern und Überwachen der Kabelverarbeitungsmaschinen, wobei der Steuerungsserver eine zentrale Datenbank umfasst, wobei die Kabelverarbeitungsmaschinen zum Senden von Produktionsparametern zu dem Steuerungsserver ausgebildet sind, wobei die Produktionsparameter Einstellungen der Kabelverarbeitungsmaschine für die Verarbeitung der Kabel durch die jeweilige Kabelverarbeitungsmaschine umfassen, wobei der Steuerungsserver zum Empfangen der Produktionsparameter und Speichern der Produktionsparameter in der zentralen Datenbank ausgebildet ist.

Vorteilhaft an diesem Überwachungssystem ist, dass üblicherweise technisch einfach zentral auf die Produktionsparameter zugegriffen werden kann und diese miteinander verglichen werden können. Darüber hinaus ist es bei diesem Überwachungssystem in der Regel möglich, die Produktionsparameter technisch einfach und schnell zu analysieren bzw. statistisch auszuwerten. Durch das Überwachungssystem und das zentrale Erfassen der Produktionsparameter lassen sich typischerweise Zusammenhänge zwischen den Produktionsparametern und weiteren Eigenschaften (z.B. wie viele Kabel in einer Zeitperiode von der jeweiligen Kabelverarbeitungsmaschine verarbeitet werden) bzw. Einstellungen der jeweiligen Kabelverarbeitungsmaschine technisch einfach feststellen. Zudem kann man bei dem Überwachungssystem durch das zentrale Erfassen der Produktionsparameter üblicherweise technisch einfach und schnell einen Überblick über die Fertigungsdaten der Kabelverarbeitungsmaschinen bekommen. Hierdurch kann in der Regel die Effizienz des Betriebs der Kabelverarbeitungsmaschinen erhöht werden.

Es wird zudem ein Computerprogrammprodukt vorgeschlagen, das von einem Prozessor eines Computers lesbare Instruktionen aufweist, die, wenn sie von dem Prozessor ausgeführt werden, den Prozessor veranlassen, das obengenannte Verfahren auszuführen. Darüber hinaus wird ein computerlesbares Medium vorgeschlagen, auf dem dieses Computerprogrammprodukt gespeichert ist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform des Verfahrens umfasst das Verfahren ferner folgende Schritte: Senden von Fehlermeldungen von einer oder mehreren der Kabelverarbeitungsmaschinen zu dem Steuerungsserver; Empfangen der Fehlermeldungen durch den Steuerungsserver; und Speichern der Fehlermeldungen in der zentralen Datenbank.

Mit anderen Worte können zusätzlich Fehlermeldungen zentral gespeichert werden.

Vorteilhaft hieran ist, dass sich im Allgemeinen durch das zentrale Speichern von Fehlermeldungen technisch einfach feststellen lässt, ob und welche Kabelverarbeitungsmaschine mehr Fehler oder mehr gleichartige Fehler aufweist als andere Kabelverarbeitungsmaschinen. Darüber hinaus lassen sich typischerweise Zusammenhänge zwischen den eingestellten Produktionsparametern und den Fehlermeldungen technisch einfach herstellen bzw. erkennen. Somit können die Kabelverarbeitungsmaschinen üblicherweise besonders effizient betrieben werden. Dies erhöht in der Regel die Anzahl der maximal zu verarbeitenden Kabel pro Zeiteinheit und die durchschnittliche Qualität der verarbeiteten Kabel. Auch lassen sich typischerweise Produktionsparameter bzw. Einstellungen der Kabelverarbeitungsmaschine, die zu einer besonders geringen Anzahl an Fehlermeldungen führen, feststellen bzw. identifizieren, so dass diese an weiteren Kabelverarbeitungsmaschinen eingestellt werden können.

Gemäß einer Ausführungsform des Verfahrens umfasst das Verfahren ferner folgende Schritte: Senden von Fertigungsdaten von dem Steuerungsserver zu einer Kabelverarbeitungsmaschine oder mehreren Kabelverarbeitungsmaschinen, wobei die Fertigungsdaten die Art des zu verarbeitenden Kabels und/oder die zu verarbeitende Stückzahl an Kabeln, insbesondere zudem die Losgröße, umfassen; Speichern der gesendeten Fertigungsdaten in der zentralen Datenbank; und Empfangen und Verarbeiten der Fertigungsdaten durch die jeweilige Kabelverarbeitungsmaschine.

Mit anderen Worten können die Fertigungsdaten, insbesondere welches Kabel bzw. welche Art von Kabel verarbeitet werden soll und wie das Kabel verarbeitet werden soll, z.B. mit welchen Komponenten (Crimpkontakt etc.) das Kabel verbunden werden soll, wie viele Kabel entsprechend verarbeitet werden sollen (Stückzahl und/oder Losgröße), zentral an die Kabelverarbeitungsmaschinen verteilt und zentral gespeichert werden.

Vorteilhaft hieran ist, dass der Steuerungsserver die Fertigungsdaten typischerweise technisch einfach an die Kabelverarbeitungsmaschinen verteilen bzw. übertragen kann. Somit kann im Allgemeinen auf einen Leitrechner verzichtet werden. Darüber hinaus können üblicherweise die Fertigungsdaten hierdurch zentral erfasst, analysiert und im Zusammenhang mit Produktionsparametern und/oder Fehlermeldungen untersucht werden.

Gemäß einer Ausführungsform des Verfahrens umfasst das Verfahren ferner folgende Schritte: Senden von Fertigungsdaten von einer Kabelverarbeitungsmaschine zu dem Steuerungsserver, wobei die Fertigungsdaten die Art des zu verarbeitenden Kabels und/oder die zu verarbeitende Stückzahl an Kabeln, insbesondere zudem die Losgröße, umfassen; Empfangen der Fertigungsdaten durch die den Steuerungsserver; und Speichern der vom Steuerungsserver empfangenen Fertigungsdaten in der zentralen Datenbank.

Mit anderen Worten können die Fertigungsdaten von der Kabelverarbeitungsmaschine zu dem Steuerungsserver gesandt und zentral gespeichert werden.

Vorteilhaft hieran ist, dass, insbesondere wenn kein Leitrechner vorhanden ist, die Fertigungsdaten an einer Kabelverarbeitungsmaschine bzw. mittels einer Kabelverarbeitungsmaschine eingegeben bzw. erfasst werden können und anschließend an den Fertigungsserver übersandt werden können. Vom Fertigungsserver aus können sie anschließend im Allgemeinen an die anderen Kabelverarbeitungsmaschinen übersandt bzw. verteilt werden. Hierdurch können die Fertigungsdaten von einer Kabelverarbeitungsmaschine typischerweise technisch einfach an die anderen Kabelverarbeitungsmaschinen übertragen bzw. repliziert werden. Zudem ist das Eingeben der Fertigungsdaten an der Kabelverarbeitungsmaschine im Allgemeinen technisch besonders einfach, schnell durchführbar und für den Benutzer besonders komfortabel. Auch können die Fertigungsdaten nach einem erfolgreich durchgeführten Test an einer Kabelverarbeitungsmaschine technisch einfach an die anderen Kabelverarbeitungsmaschinen übertragen werden.

Gemäß einer Ausführungsform des Verfahrens umfasst das Verfahren ferner folgende Schritte: Senden von Qualitätsdaten und/oder Qualitätsparameter von einer oder mehreren Kabelverarbeitungsmaschinen zu dem Steuerungsserver, wobei die Qualitätsdaten Informationen über die Qualität der verarbeiteten Kabel umfassen und/oder die Qualitätsparameter Einstellungen für das Feststellen der Qualität der verarbeiteten Kabel umfassen; und Empfangen der Qualitätsdaten und/oder Qualitätsparameter durch den Steuerungsserver und Speichern der Qualitätsdaten und/oder Qualitätsparameter in der zentralen Datenbank.

Mit anderen Worten können hierbei Qualitätsdaten über das verarbeitete Kabel zentral erfasst und gespeichert werden.

Vorteilhaft hieran ist, dass die Qualität der Verarbeitungen durch die unterschiedlichen Kabelverarbeitungsmaschinen miteinander typischerweise technisch einfach verglichen werden können. Zudem können üblicherweise Zusammenhänge zwischen Qualität, Fehlermeldungen, Fertigungsdaten und Produktionsparameter analysiert bzw. erkannt werden. Somit kann im Allgemeinen z.B. festgestellt werden, dass der Unterschied in einem Aspekt der Produktionsparameter bei einer Kabelverarbeitungsmaschine im Vergleich zu anderen Kabelverarbeitungsmaschinen zu einer unterdurchschnittlichen Qualität der verarbeiteten Kabel führt. Die Qualitätsdaten können typischerweise auch Daten über die Art der durchgeführten Qualitätsmessung(en) umfassen.

Gemäß einer Ausführungsform des Verfahrens umfasst das Verfahren ferner folgende Schritte: Senden von Anmeldedaten und/oder Abmeldedaten von Benutzern an der jeweiligen Kabelverarbeitungsmaschine von einer Kabelverarbeitungsmaschine oder mehreren Kabelverarbeitungsmaschinen zu dem Steuerungsserver, wobei insbesondere die Anmeldedaten und/oder Abmeldedaten Uhrzeiten des Anmeldens und/oder Abmeldens von Benutzern an der jeweiligen Kabelverarbeitungsmaschine umfassen; und Speichern der Anmeldedaten und/oder Abmeldedaten in der zentralen Datenbank.

Mit anderen Worten kann das Einloggen und Ausloggen von Benutzer an den einzelnen Kabelverarbeitungsmaschinen zentral protokolliert werden.

Vorteilhaft hieran ist, dass üblicherweise festgestellt werden kann, wer sich wann an welcher Kabelverarbeitungsmaschine eingeloggt bzw. ausgeloggt hat. Hierdurch kann im Allgemeinen z.B. bei einem Vergleich mit Arbeitsdaten bzw. Arbeitszeiten von Mitarbeitern festgestellt werden, ob Passwörter zwischen den Benutzern unzulässigerweise weitergegeben wurden. Z.B. kann, wenn ein Benutzer eingeloggt war, obwohl er keinen Dienst hatte, erkannt werden, dass die Login-Daten dieses Benutzers von einem anderen Benutzer verwendet wurden. Es ist auch denkbar, dass jede Eingabe bzw. durchgeführte Veränderung von Parametern und/oder Daten durch den Benutzer protokolliert bzw. gespeichert wird. Dies kann revisionssicher durchgeführt werden. Hierdurch kann typischerweise festgestellt werden, wer eine Veränderung durchgeführt hat und dieser Benutzer kann gegebenenfalls hierzu befragt werden, warum und weshalb er bestimmte Änderungen von Produktionsparametern, Qualitätsparameter und/oder Fertigungsdaten durchgeführt hat.

Gemäß einer Ausführungsform des Verfahrens umfasst das Verfahren ferner folgenden Schritt: Senden einer Fehlermeldung und/oder einer Warnmeldung, insbesondere basierend auf der Fehlermeldung, von dem Steuerungsserver an einen Überwachungscomputer und/oder an ein Endgerät eines Benutzers der Kabelverarbeitungsmaschine, insbesondere eines Benutzers mit besonderen Rechten an der jeweiligen Kabelverarbeitungsmaschine.

Mit anderen Worten kann ein Benutzer der Kabelverarbeitungsmaschine aktiv (Push-Nachricht) über eine Fehlermeldung informiert werden.

Vorteilhaft hieran ist, dass der Benutzer im Allgemeinen über eine Fehlermeldung informiert werden kann, auch wenn er sich nicht in der Nähe der Kabelverarbeitungsmaschine befindet. Dies verringert typischerweise die Zeit, bis der Fehler quittiert bzw. behoben wurde. Dies erhöht üblicherweise die Effizienz der Kabelverarbeitungsmaschinen. Der Benutzer kann besondere Rechte an der Kabelverarbeitungsmaschine oder den Kabelverarbeitungsmaschinen haben, d.h. mehr bzw. weitergehende Rechte als zumindest ein anderer einzelner Benutzer der Kabelverarbeitungsmaschine. Beispielsweise können die besonderen Rechte Rechte zum Quittieren bestimmter Fehlermeldungen und/oder Rechte zum Ändern von bestimmten Produktionsparameter und/oder Qualitätsparametern oder ähnliches umfassen. Der Benutzer mit besonderen Rechten "darf" sozusagen mehr als ein anderer Benutzer. Regeln, wann eine Fehlermeldung und/oder Warnmeldung gesendet wird, können durch den Benutzer festgelegt werden. Beispielsweise kann eine Fehlermeldung und/oder Warnmeldung gesendet werden, wenn sich ein unberechtigter Benutzer anmeldet bzw. dies versucht, wenn überdurchschnittlich bzw. auffällig hohe Stillstandzeiten (z.B. mindestens 10% über dem Durchschnitt der letzten 24 h, der letzten Woche oder des letzten Monats) der Kabelverarbeitungsmaschinen festgestellt werden und/oder ein mehrfaches Auftreten eines bestimmten Fehlers bei einer Kabelverarbeitungsmaschine oder bei verschiedenen Kabelverarbeitungsmaschinen festgestellt wird.

Gemäß einer Ausführungsform des Verfahrens umfasst die Kabelverarbeitungsmaschinen zueinander unterschiedliche Arten von Kabelverarbeitungsmaschinen, wobei die Kabelverarbeitungsmaschinen der gleichen Art jeweils in einer Gruppe zusammengefasst werden, wobei der Steuerungsserver jeweils die gleichen Daten und/oder Parameter an die Kabelverarbeitungsmaschinen der jeweiligen Gruppe sendet.

Mit anderen Worten können hierbei gleichartige Gruppen von Kabelverarbeitungsmaschinen gebildet werden.

Vorteilhaft hieran ist, dass die Überwachung und/oder Steuerung der Kabelverarbeitungsmaschinen in der Regel technisch besonders einfach ist. Zudem kann der Steuerungsserver typischerweise technisch besonders einfach ausgebildet sein. Jede Gruppe kann jeweils über ein gemeinsames Interface bzw. eine gemeinsame Schnittstelle mit dem Steuerungsserver verbunden sein. Hierdurch werden Kosten und Aufwand gespart.

Gemäß einer Ausführungsform des Verfahrens weist die Kabelverarbeitungsmaschinen jeweils eine lokale Datenbank auf, wobei Daten und/oder Parameter zwischen den Kabelverarbeitungsmaschinen und dem Steuerungsserver derart ausgetauscht werden, dass die zentrale Datenbank jeweils eine Kopie der lokalen Datenbanken der Kabelverarbeitungsmaschinen aufweist.

Mit anderen Worten umfasst die zentrale Datenbank Kopien der Datenbanken der Kabelverarbeitungsmaschinen, d.h. alle Daten der jeweiligen Datenbanken.

Vorteilhaft hieran ist, dass der Steuerungsserver bzw. ein Benutzer üblicherweise technisch einfach auf alle Daten zugreifen kann und diese analysieren kann. Zudem existiert auf diese Weise in der Regel ein Backup der lokalen Datenbanken, wodurch die Gefahr eines Datenverlusts verringert wird.

Gemäß einer Ausführungsform des Verfahrens umfasst das Verfahren ferner folgende Schritte: Senden von Kabelverarbeitungsstartzeiten und/oder Kabelverarbeitungsendzeiten von Produktionslosen der jeweiligen Kabelverarbeitungsmaschine zu dem Steuerungsserver; Empfangen der Kabelverarbeitungsstartzeiten und/oder Kabelverarbeitungsendzeiten durch den Steuerungsserver; und Speichern der Kabelverarbeitungsstartzeiten und/oder Kabelverarbeitungsendzeiten in der zentralen Datenbank.

Mit anderen Worten kann hierdurch die Startzeitpunkte und/oder Endzeitpunkte von Produktionslosen zentral erfasst und gespeichert werden.

Ein Vorteil hiervon ist, dass Effizienzanalysen der einzelnen Kabelverarbeitungsmaschinen in der Regel technisch einfach durchgeführt werden können. Zudem können Kabelverarbeitungsmaschinen identifiziert werden, die deutlich länger oder kürzer für die Verarbeitung einer gleichen Anzahl von Kabeln in der gleichen Weise als der Durchschnitt gebraucht haben.

Gemäß einer Ausführungsform des Verfahrens umfasst das Verfahren ferner folgende Schritte: Senden von Produktionsparameter von dem Steuerungsserver zu der einen Kabelverarbeitungsmaschine oder den mehreren Kabelverarbeitungsmaschinen; Empfangen und Übernehmen der Produktionsparameter durch die Kabelverarbeitungsmaschine oder die Kabelverarbeitungsmaschinen; und Speichern der gesendeten Produktionsparameter in der zentralen Datenbank.

Mit anderen Worten können hierdurch Produktionsparameter der Kabelverarbeitungsmaschinen zentral durch den Steuerungsserver geändert werden.

Vorteilhaft hieran ist, dass typischerweise technisch einfach die Produktionsparameter geändert werden können, ohne sich in der Nähe der jeweiligen Kabelverarbeitungsmaschine aufzuhalten. Folglich können in der Regel Produktionsparameter, die als effizient identifiziert wurden, technisch einfach von dem Steuerungsserver an die Kabelverarbeitungsmaschinen übertragen werden, so dass diese die Produktionsparameter übernehmen.

Gemäß einer Ausführungsform des Verfahrens umfasst das Verfahren ferner folgenden Schritt: Bereitstellen eines Webservices, wobei der Webservice zum - Darstellen von Gruppen der Kabelverarbeitungsmaschinen und/oder Definieren von Gruppen von Kabelverarbeitungsmaschinen, - Verwalten von Benutzern der Kabelverarbeitungsmaschinen, insbesondere mit dem jeweiligen Benutzerlevel, - Darstellen und/oder Verändern der Fertigungsdaten der Kabelverarbeitungsmaschinen und/oder Verteilen von Artikeldefinitionen vom Steuerungsserver an die Kabelverarbeitungsmaschinen, - Darstellen und/oder Vergleichen der Produktionsparameter einer bestimmten Gruppe von Kabelverarbeitungsmaschinen, - Definieren und Abspeichern von Regeln zum Darstellen, Vergleichen, Filtern und/oder Synchronisieren der in der zentralen Datenbank vorhandenen Daten, - statistischen Auswerten der Fertigungsdaten, Produktionsparameter, weiterer Daten und/oder Fehlermeldungen der zentralen Datenbank, und/oder - Definieren von Ereignissen und/oder Abweichungen von Daten, die eine Fehlermeldung und/oder einen Warnhinweis erzeugen ausgebildet ist.

Mit anderen Worten kann ein über ein Netz, insbesondere ein lokales Netz oder das Internet bzw. World Wide Web, erreichbarer Service bereitgestellt werden, mittels dem verschiedene Funktionalitäten des Überwachungssystems bzw. der Kabelverarbeitungsmaschinen verwendet werden können und/oder Informationen über die Kabelverarbeitungsmaschinen geändert und/oder angezeigt werden können.

Vorteilhaft hieran ist, dass ein Benutzer typischerweise nicht physisch vor Ort sein muss, um die verschiedenen Funktionalitäten bzw. Funktionen des Überwachungssystems bzw. der Kabelverarbeitungsmaschinen zu nutzen und/oder Veränderungen bei den Kabelverarbeitungsmaschinen vorzunehmen. Der Benutzer kann dies auch aus der Ferne bzw. per Fernwartung durchführen. Dies senkt die Kosten und erhöht die Variabilität bzw. Flexibilität der Kabelverarbeitungsmaschinen. Insbesondere kann beim Auftreten einer Fehlermeldung bzw. eines Problems der Benutzer, auch wenn er nicht vor Ort ist, den Fehler bzw. das Problem schnell aus der Ferne beheben. Auch können im Allgemeinen statistische Auswertungen, Fehleranalysen etc. aus der Ferne durchgeführt werden.

Gemäß einer Ausführungsform des Überwachungssystems sind die Kabelverarbeitungsmaschinen zum Senden von Fehlermeldungen zu dem Steuerungsserver ausgebildet, wobei der Steuerungsserver zum Empfangen der Fehlermeldungen und Speichern der Fehlermeldungen in der zentralen Datenbank ausgebildet ist.

Mit anderen Worten können bei dem Überwachungssystem zusätzlich Fehlermeldungen zentral gespeichert werden.

Ein weiterer Vorteil hiervon ist, dass Fehlermeldungen der Kabelverarbeitungsmaschine typischerweise zentral gespeichert werden können. Somit lässt mittels der zentralen Datenbank in der Regel technisch einfach feststellen, ob und welche Kabelverarbeitungsmaschine mehr Fehler oder mehr gleichartige Fehler aufweist als andere Kabelverarbeitungsmaschinen. Vorteilhaft an dem Überwachungssystem ist zudem, dass sich in der Regel Zusammenhänge bzw. Abhängigkeiten zwischen den eingestellten Produktionsparametern und den Fehlermeldungen der Kabelverarbeitungsmaschinen technisch einfach analysieren bzw. feststellen lassen. Folglich können die Kabelverarbeitungsmaschinen in der Regel sehr effizient betrieben werden. Hierdurch kann typischerweise die Anzahl der maximal zu verarbeitenden Kabel pro Zeiteinheit und die durchschnittliche Qualität der verarbeiteten Kabel bei dem

Überwachungssystem erhöht werden. Ein weiterer Vorteil des Überwachungssystem ist, dass Produktionsparameter bzw. Einstellungen der Kabelverarbeitungsmaschine, die zu einer besonders geringen Anzahl an Fehlermeldungen führen, sich im Allgemeinen technisch einfach feststellen bzw. identifizieren lassen, so dass diese an weiteren Kabelverarbeitungsmaschinen eingestellt werden können.

Gemäß einer Ausführungsform des Überwachungssystems sind die Kabelverarbeitungsmaschinen zum Senden von Qualitätsdaten und/oder Qualitätsparametern zu dem Steuerungsserver ausgebildet, wobei die Qualitätsdaten Informationen über die Qualität der verarbeiteten Kabel umfassen und/oder wobei die Qualitätsparameter Einstellungen für das Feststellen der Qualität der verarbeiteten Kabel umfassen, und wobei der Steuerungsserver zum Empfangen der Qualitätsdaten und/oder Qualitätsparameter und Speichern der Qualitätsdaten und/oder Qualitätsparameter in der zentralen Datenbank ausgebildet ist.

Mit anderen Worten können Qualitätsdaten und/oder Qualitätsparameter von den Kabelverarbeitungsmaschinen an den Steuerungsserver übersandt und in der zentralen Datenbank gespeichert werden.

Ein Vorteil hiervon ist, dass die Qualität der Verarbeitungen durch die unterschiedlichen Kabelverarbeitungsmaschinen durch den Steuerungsserver technisch einfach miteinander verglichen und analysiert werden können. Darüber hinaus können Beziehungen bzw. Zusammenhänge zwischen Qualität, Fehlermeldungen, Fertigungsdaten und Produktionsparameter analysiert bzw. erkannt werden. Folglich kann in der Regel z.B. erkannt werden, dass der Unterschied in einem Aspekt der Produktionsparameter bei einer Kabelverarbeitungsmaschine im Vergleich zu anderen Kabelverarbeitungsmaschinen zu einer unterdurchschnittlichen Qualität der verarbeiteten Kabel führt. Die Qualitätsdaten können typischerweise auch Daten über die Art der durchgeführten Qualitätsmessung(en) umfassen. Auch kann durch den Steuerungsserver technisch einfach bestimmt werden, wie die Qualität an der jeweiligen Kabelverarbeitungsmaschine bestimmt wurde.

Gemäß einer Ausführungsform des Überwachungssystems weisen die Kabelverarbeitungsmaschinen jeweils eine lokale Datenbank auf, und wobei die zentrale Datenbank jeweils eine Kopie der lokalen Datenbanken der Kabelverarbeitungsmaschinen aufweist.

Mit anderen Worten kann sich von den lokalen Datenbanken jeweils eine Kopie in der zentralen Datenbank befinden.

Ein Vorteil hiervon ist, dass der Steuerungsserver bzw. ein Benutzer des Überwachungssystems im Allgemeinen technisch einfach auf alle Daten der Datenbank zugreifen kann und diese analysieren kann. Darüber hinaus existiert somit im Allgemeinen ein Backup der jeweiligen lokalen Datenbank, wodurch das Risiko von Datenverlusten minimiert wird.

Gemäß einer Ausführungsform des Überwachungssystems weist das Überwachungssystem ferner stationäre und/oder mobile Endgeräte auf, wobei der Steuerungsserver zum Senden von Fehlermeldungen und/oder Statistiken über die Qualitätsdaten an die Endgeräte ausgebildet ist.

Mit anderen Worten können Fehlermeldungen und/oder Statistiken aktiv ("Push-Nachricht") an Endgeräte gesandt werden.

Ein Vorteil hiervon ist, dass der Benutzer mittels dem Endgerät typischerweise technisch einfach und schnell informiert werden kann, auch wenn sich der Benutzer nicht in der Nähe der jeweiligen Kabelverarbeitungsmaschine befindet. Durch das Senden der Fehlermeldungen und/oder Statistiken kann der Benutzer innerhalb kurzer Zeit reagieren und auf diese Weise die Zeit, bis die Fehlermeldung quittiert bzw. der Fehler behoben wird, reduzieren. Dies erhöht üblicherweise die Effizienz der Kabelverarbeitungsmaschinen. Der Benutzer des jeweiligen Endgeräts kann besondere Rechte an der Kabelverarbeitungsmaschine oder den Kabelverarbeitungsmaschinen haben, d.h. mehr bzw. weitergehende Rechte als zumindest ein anderer einzelner Benutzer der Kabelverarbeitungsmaschine. Es ist möglich, dass der Benutzer weitgehende Rechte zum Quittieren bestimmter Fehlermeldungen und/oder Rechte zum Ändern von bestimmten Produktionsparameter und/oder Qualitätsparametern oder ähnliches an der Kabelverarbeitungsmaschine bzw. den Kabelverarbeitungsmaschinen umfassen. Sozusagen "darf" der Benutzer mit besonderen Rechten bei den Kabelverarbeitungsmaschinen sozusagen mehr als ein anderer bzw. ein normaler Benutzer.

Gemäß einer Ausführungsform des Überwachungssystems ist das Überwachungssystem zum Bereitstellen eines Webservices ausgebildet, wobei der Webservice zum - Darstellen von Gruppen der Kabelverarbeitungsmaschinen und/oder Definieren von Gruppen von Kabelverarbeitungsmaschinen, - Verwalten von Benutzern der Kabelverarbeitungsmaschinen, insbesondere mit dem jeweiligen Benutzerlevel, - Darstellen und/oder Verändern der Fertigungsdaten der Kabelverarbeitungsmaschinen und/oder Verteilen von Artikeldefinitionen vom Steuerungsserver an die Kabelverarbeitungsmaschinen, - Darstellen und/oder Vergleichen der Produktionsparameter einer bestimmten Gruppe von Kabelverarbeitungsmaschinen, - Definieren und Abspeichern von Regeln zum Darstellen, Vergleichen, Filtern und/oder Synchronisieren der in der zentralen Datenbank vorhandenen Daten, - statistischen Auswerten der Fertigungsdaten, Produktionsparameter, weiterer Daten und/oder Fehlermeldungen der zentralen Datenbank, und/oder - Definieren von Ereignissen und/oder Abweichungen von Daten, die eine Fehlermeldung und/oder einen Warnhinweis erzeugen ausgebildet ist.

Mit anderen Worten kann das Überwachungssystem einen über ein Netz, insbesondere ein lokales Netz oder das Internet bzw. World Wide Web, erreichbaren Service anbieten, mittels dem verschiedene Funktionalitäten des Überwachungssystems bzw. der Kabelverarbeitungsmaschinen verwendet werden können und/oder Informationen über die Kabelverarbeitungsmaschinen geändert und/oder angezeigt werden können.

Ein Vorteil hiervon ist, dass ein Benutzer im Allgemeinen nicht vor Ort sein muss und dennoch verschiedene Funktionalitäten bzw. Funktionen des Überwachungssystems bzw. der Kabelverarbeitungsmaschinen nutzen kann. Zudem kann der Benutzer aus der Ferne Einstellungen der Kabelverarbeitungsmaschine erfassen und/oder verändern. Hierdurch können die Betriebskosten gesenkt und die Länge bzw. Anzahl von Betriebsunterbrechungen der Kabelverarbeitungsmaschinen verringert werden. Wenn z.B. eine Fehlermeldung auftritt, kann der Benutzer informiert werden und/oder es können automatisiert nach festgelegten Regeln Maßnahmen ergriffen werden. Der Benutzer kann aus der Ferne Veränderungen vornehmen bzw. den Fehler beheben. Zudem können statistische Auswertungen, Fehleranalysen etc. aus der Ferne durchgeführt werden.

Die Produktionsparameter können beispielsweise Geschwindigkeit und Beschleunigung des Kabelvorschubes, Einschneidtiefe der Messer beim Abisolieren, (Schwenk- )Geschwindigkeiten beim Anfahren der Bearbeitungsstationen, Prozesseinstellungen an den Prozessmodulen (Crimppressen und Tüllenmodulen) und/oder Parameter für die Einstellung der Qualitätsüberwachungen umfassen.

Es wird daraufhingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

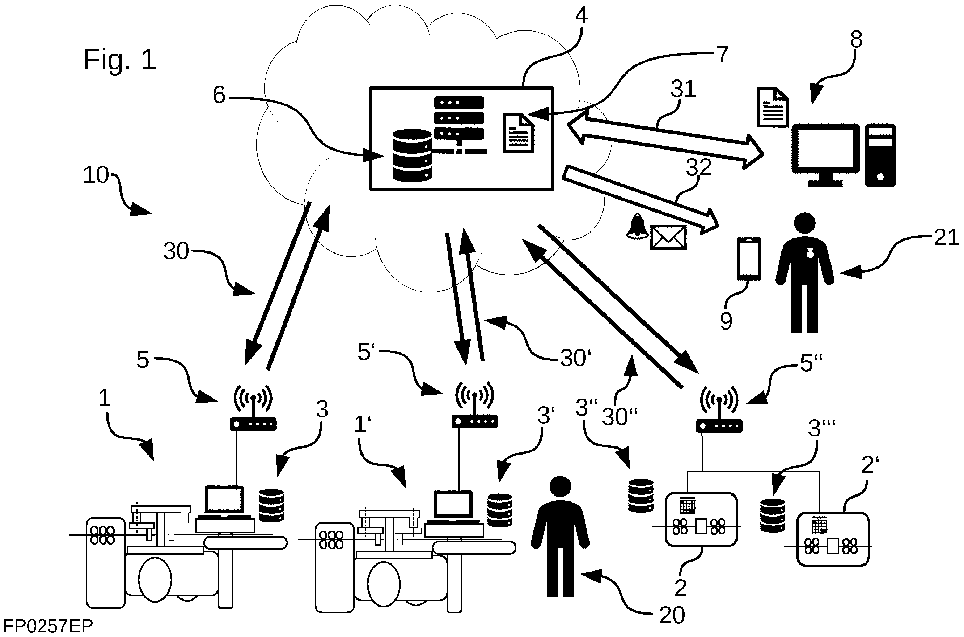

- Fig. 1 zeigt: eine schematische Darstellung einer Ausführungsform des erfindungsgemäßen Überwachungssystems.

Die Figur ist lediglich schematisch und nicht maßstabsgetreu.

Fig. 1 zeigt eine schematische Darstellung einer Ausführungsform des erfindungsgemäßen Überwachungssystems 10.

Das Überwachungssystem 10 (das auch ein Steuerungs-/Überwachungssystem sein kann) umfasst einen Steuerungsserver 4 mit einer zentralen Datenbank 6 und mehrere Kabelverarbeitungsmaschinen 1, 1', 2, 2'. Unter zentraler Datenbank 6 ist insbesondere eine Datenbank 6 zu verstehen, die nicht nur lokal an den jeweiligen Kabelverarbeitungsmaschinen 1, 1', 2, 2' vorhanden ist, sondern auf die zentral, z.B. vom Steuerungsserver 4 aus, zugegriffen werden kann. Die zentrale Datenbank 6 kann natürlich über mehrere Standorte verteilt und/oder gespiegelt sein.

In Fig. 1 sind vier Kabelverarbeitungsmaschinen 1, 1', 2, 2' dargestellt: zwei Kabelverarbeitungsmaschinen 1,1' eines ersten technisch komplexeren Typs bzw. einer technisch komplexen Art links in Fig. 1 und zwei Kabelverarbeitungsmaschine 2, 2' eines zweiten technisch einfacherer Typs bzw. einer technisch einfacherer Art rechts in Fig. 2. Die Kabelverarbeitungsmaschinen 1, 1', 2, 2' des gleichen Typs bzw. der gleichen Art können jeweils in einer Gruppe zusammengefasst sein bzw. werden. Der Steuerungsserver 4 kann die Gruppen ansprechen bzw. Daten mit diesen austauschen oder die einzelnen Kabelverarbeitungsmaschinen 1, 1', 2, 2' ansprechen bzw. Daten mit diesen austauschen.

Die Kabelverarbeitungsmaschinen 1, 1', 2, 2' weisen jeweils eine lokale Datenbank 3, 3', 3", 3‴ auf. In der lokalen Datenbank 3, 3', 3", 3‴ werden Fehlermeldungen, Qualitätsdaten, Fertigungsdaten und/oder Produktionsparameter gespeichert.

Die Kabelverarbeitungsmaschinen 1, 1', 2, 2' sind jeweils über ein Vermittlungsgerät 5, 5', 5" (Gateway) bzw. Interface mit dem Steuerungsserver 4 verbunden. Es ist möglich, dass sich mehrere Kabelverarbeitungsmaschinen 1, 1', 2, 2' bzw. jeweils eine Gruppe von Kabelverarbeitungsmaschinen 1, 1', 2, 2' ein Vermittlungsgerät 5, 5', 5"teilt.

Die Vermittlungsgeräte 5, 5', 5"sind kabellos mit dem Steuerungsserver 4 verbunden. Die Verbindung kann über ein lokales Netzwerk, über Mobilfunk und/oder über das Internet erfolgen.

Zwischen den Vermittlungsgeräten 5, 5', 5" und dem Steuerungsserver 4 kann eine bidirektionale Kommunikation 30, 30', 30" stattfinden.

Der Steuerungsserver 4 kann als Cloud-Lösung über das Internet oder eine Komponente eines lokalen Netzwerks sein. Der Steuerungsserver 4 kann z.B. einen Rechner und die zentrale Datenbank 6 umfassen. Auf dem Steuerungsserver 4 läuft Software 7 mit mehreren Softwaremodulen.

Beispielsweise kann ein erstes Softwaremodul für die Kommunikation mit den Kabelverarbeitungsmaschinen 1, 1', 2, 2' ausgebildet sein. Das erste Softwaremodul kann mit einem definierten Übertragungsprotokoll (z.B. TCP/IP) die Daten (u.a. Qualitätsdaten und/oder Fertigungsdaten), Parameter (u.a. Produktionsparameter und/oder Qualitätsparameter) und Fehlermeldungen senden und/oder empfangen.

Ein zweites Softwaremodul kann zum Speichern der Daten, Parameter und Fehlermeldungen in der zentralen Datenbank 6 ausgebildet sein. Die Datenbank 6 kann eine zweckmäßige Datenstruktur aufweisen, z.B. eine relationale Datenbank 6.

Ein drittes Softwaremodul kann einen Webservice zur Verfügung stellen. Es ist auch möglich, dass das dritte Softwaremodul zum Senden von Fehlermeldungen und/oder Warnmeldungen oder sonstiger Informationen als Push-Nachricht 32 bzw. aktive Nachricht an ein stationäres Endgerät 8 (z.B. einen Desktopcomputer) und/oder an mobile Endgeräte 9 (z.B. Handy, Smartphone, Tablet, Laptop) ausgebildet ist. Der Webservice kann es berechtigen Benutzern 21 über eine im entsprechenden Webclient integrierte Benutzeroberfläche ermöglichen, mit dem Steuerungsserver 4 zu kommunizieren. Der Webclient kann auf dem stationären Endgerät 8 und/oder auf den mobilen Endgeräten 9 betrieben werden. Zwischen dem stationären Endgerät 8 und dem Steuerungsserver 4 kann eine bidirektionale Kommunikation 31 stattfinden. Der Webclient bietet über seine Benutzeroberfläche z.B. folgende Funktionen an:
- Darstellung der Konfigurationen der Kabelverarbeitungsmaschinen 1, 1', 2, 2' und Definieren der Gruppen von Kabelverarbeitungsmaschinen 1, 1', 2, 2'. Diese können für das Vergleichen und Synchronisieren bzw. Verändern der Produktionsparameter der Kabelverarbeitungsmaschinen 1, 1', 2, 2' verwendet werden;
- Verwaltung der Benutzer 20, 21 der Kabelverarbeitungsmaschinen 1, 1', 2, 2' mit dem jeweiligen Benutzerlevel;
- Darstellen der Fertigungsdaten und Verteilen von Artikeldefinitionen. Hierdurch können diese Daten auch verteilt werden, wenn kein Leitrechner bzw. keine übergeordnete Software zur Produktionssteuerung vorhanden ist;
- Darstellen und Vergleichen der Produktionsparameter einer bestimmten Gruppe von Kabelverarbeitungsmaschinen 1, 1', 2, 2'. Hierdurch können nicht optimal eingestellte Kabelverarbeitungsmaschinen 1, 1', 2, 2' erkannt werden und/oder optimale Produktionsparameter bestimmt bzw. gefunden werden.
- Definieren und Abspeichern von Regeln zum Darstellen, Vergleichen, Filtern und Synchronisieren der in der zentralen Datenbank 6 vorhandenen Daten. Hierdurch können wiederkehrende Aufgaben automatisiert werden bzw. wiederkehrende Aufgaben durch Ausführen eines entsprechenden Skripts beim Erfüllen bestimmter Bedingungen durchgeführt werden;
- Statistische Auswertungen der Daten, Parametern und/oder Fehlermeldungen der zentralen Datenbank 6. Hierdurch können beispielsweise für den vorausschauenden Unterhalt oder die Planung von Verbesserungsmaßnahmen im organisatorischen Bereich entsprechende Statistiken erstellt werden;
   und/oder
- Definieren von Ereignissen und Abweichungen von Produktionsparametern, die eine automatische Meldung erzeugen. Beim Unterschreiten oder Überschreiten von vorgegebenen Grenzwerten von Produktionsparametern bzw. Abweichungen von vorgegebenen Durchschnittswerten oberhalb eines vorbestimmten Grenzwerts können automatisch Fehlermeldungen und/oder Warnhinweise erzeugt werden und an die Endgeräte 8, 9 gesendet werden. Die Fehlermeldungen und/oder Warnhinweise können in Form einer E-Mail, einer SMS, eines Faxes, eines Instant-Messenger-Nachricht oder ähnlichem versandt werden.

Die definierten Regeln können auch dazu dienen, Daten und/oder Parameter automatisch an die Kabelverarbeitungsmaschinen 1, 1', 2, 2' zu verteilen bzw. zu übertragen. So lassen sich z.B. Artikeldefinitionen einfach auf mehrere Kabelverarbeitungsmaschinen 1, 1', 2, 2' oder alle Kabelverarbeitungsmaschinen 1, 1', 2, 2' übertragen, da die Kabelverarbeitungsmaschinen 1, 1', 2, 2' und das Fertigungsmaterial eindeutige Kennungen aufweisen.

Die definierten Regeln, die angewandten Filter und/oder die durchgeführten Abfragen werden in der zentralen Datenbank 6 gespeichert. Dadurch lassen sich die vorhandenen Daten in der Datenbank 6 besonders effizient nutzen. Vorstellbar ist auch, dass mehrere Steuerungsserver 4, die jeweils mehrere Kabelverarbeitungsmaschinen 1, 1', 2, 2' überwachen und/oder steuern, miteinander vernetzt bzw. verbunden sind. Diese können an einem Standort oder mehreren Standorten sein.

Die Kabelverarbeitungsmaschinen 1, 1', 2, 2' können z.B. folgende Fertigungsmaterialien verarbeiten:
- Kabel, gekennzeichnet durch den Kabeltyp (Litzenanzahl, den Leiterquerschnitt, den Außendurchmesser und die Farbe der Isolation), die Länge des Kabels und die Länge der Abisolierungen an den beiden Kabelenden und gegebenenfalls besonderen Verarbeitungen der abisolierten Kabelenden wie Verdrillen, Verzinnen oder Kompaktieren,
- Kontaktteile (Crimpkontakte oder Aderendhülsen) an einem oder beiden Kabelenden, gekennzeichnet durch ihren Typ und die Position relativ zum Kabelende,
   und/oder
- Dichtungstüllen, gekennzeichnet durch ihren Typ und die Position relativ zum Kabelende.

Die Fertigungsdaten können z.B. eine Definition der zu verarbeitenden Artikel und ihrer Komponenten und/oder Fertigungsaufträge mit Stückzahl und/oder Losgrößen umfassen.

Die Fertigungsdaten werden von dem Steuerungsserver 4 zu der Kabelverarbeitungsmaschine 1, 1', 2, 2', der Gruppe von Kabelverarbeitungsmaschinen 1, 1', 2, 2' oder den Kabelverarbeitungsmaschinen 1, 1', 2, 2' gesandt, von dieser bzw. diesen empfangen und übernommen bzw. verarbeitet. Es ist auch möglich, dass die Fertigungsdaten von der Kabelverarbeitungsmaschine 1, 1', 2, 2' zu dem Steuerungsserver 4 gesandt werden und von dem Steuerungsserver 4 gespeichert werden. Der Steuerungsserver 4 kann die empfangenen Fertigungsdaten in der zentralen Datenbank 6 speichern und/oder die Fertigungsdaten an weitere Kabelverarbeitungsmaschine 1, 1', 2, 2' übertragen bzw. senden.

Die Produktionsparameter werden typischerweise an der Maschine eingestellt, um die Artikel besonders effizient produzieren zu können. Die Produktionsparameter können von den Kabelverarbeitungsmaschinen 1, 1', 2, 2' zu dem Steuerungsserver 4 gesendet, von dem Steuerungsserver 4 empfangen und in der zentralen Datenbank 6 gespeichert werden.

Qualitätsdaten und/oder Qualitätsparameter können Daten für die Einstellung von Qualitätsüberwachungsgeräten und/oder Ergebnisse/Resultate von durchgeführten Qualitätsüberwachungen bzw. Qualitätsmessungen umfassen. Typische Qualitätsüberwachungsgeräte sind u.a. Einschneideüberwachung und optische Überwachungen für das Abisolieren, Crimpkraftüberwachungen für das Crimpen der Kontaktteile und/oder optische Überwachungen für die korrekte Position der Dichtungstüllen. Die Qualitätsdaten und/oder Qualitätsparameter werden von der Kabelverarbeitungsmaschine 1, 1', 2, 2', der Gruppe von Kabelverarbeitungsmaschinen 1, 1', 2, 2' oder den Kabelverarbeitungsmaschinen 1, 1', 2, 2' zu dem Steuerungsserver 4 gesandt. Möglich ist auch, dass Qualitätsparameter von dem Steuerungsserver 4 an die Kabelverarbeitungsmaschine 1, 1', 2, 2', die Gruppe von Kabelverarbeitungsmaschinen 1, 1', 2, 2' oder die Kabelverarbeitungsmaschinen 1, 1', 2, 2' gesandt werden und von der Kabelverarbeitungsmaschine 1, 1', 2, 2' bzw. den Kabelverarbeitungsmaschinen 1, 1', 2, 2' übernommen werden. Auf diese Weise können die Einstellungen bzw. Parameter zum Überprüfen des verarbeiteten Kabels bei den Kabelverarbeitungsmaschinen 1, 1', 2, 2' technisch einfach zentral geändert bzw. verändert werden.

Die zentrale Datenbank 6 kann eine Kopie bzw. ein Abbild (Digital Twin) der jeweils an den Kabelverarbeitungsmaschinen 1, 1', 2, 2' vorhandenen lokalen Datenbanken 3, 3', 3", 3‴ umfassen. Hierzu können zwischen dem Steuerungsserver 4 und den Kabelverarbeitungsmaschinen 1, 1', 2, 2' die Daten derart miteinander ausgetauscht werden, dass zumindest nach einer durchgeführten Synchronisation der Datenbanken 3, 3', 3", 3‴, 6 die zentrale Datenbank 6 jeweils eine aktuelle Kopie der jeweils lokalen Datenbank 3, 3', 3", 3‴ umfasst und dass die lokalen Datenbanken 3, 3', 3", 3‴ jeweils der Kopie in der zentralen Datenbank 6 entsprechen. Die Synchronisation kann in festgelegten Zeitabständen (z.B. alle 5 min, alle 30 min, jede Stunde) und/oder bei einer Aktualisierung der Datenbank durchgeführt werden.

Die Fehlermeldungen können von den Kabelverarbeitungsmaschinen 1, 1', 2, 2' zu dem Steuerungsserver 4 gesandt, von dem Steuerungsserver 4 empfangen und in der zentralen Datenbank 6 gespeichert werden.

Die zentrale Datenbank 6 speichert die Daten, Parameter und Fehlermeldungen der Kabelverarbeitungsmaschinen 1, 1', 2, 2' mit einer entsprechenden Zuordnung zu der jeweiligen Kabelverarbeitungsmaschine 1, 1', 2, 2', so dass die Daten, Parameter und Fehlermeldungen jeweils einer Kabelverarbeitungsmaschine 1, 1', 2, 2' oder einer Gruppe von Kabelverarbeitungsmaschinen 1, 1', 2, 2' eindeutig zugeordnet werden können. Darüber hinaus ist es möglich, dass die zentrale Datenbank 6 weitere Ereignisse speichert. Die weiteren Ereignisse werden von den jeweiligen Kabelverarbeitungsmaschinen 1, 1', 2, 2' an den Steuerungsserver 4 gesandt oder von dem Steuerungsserver 4 an die Kabelverarbeitungsmaschinen 1, 1', 2, 2'. Die weiteren Ereignisse können unter anderem folgendes umfassen:
- Einloggen (Anmelden) und Ausloggen (Abmelden) der Maschinenbediener mit den zugehörigen Benutzerlevel und/oder mit den dazugehörigen Uhrzeiten (Anmeldedaten und Abmeldedaten),
- Start und Endzeiten und Stückzahlen von Fertigungsaufträgen und Lose,
- Fehlermeldungen und weitere Produktionsunterbrüche bzw. Unterbrechungen des Betriebs der Kabelverarbeitungsmaschinen 1, 1', 2, 2',
   und/oder
- Erkennen bzw. Melden von schlecht produzierten Kabel und/oder Resultate der Qualitätsüberwachungen.

Die Benutzer 20, 21 können unterschiedliche (Zugriffs-/Änderungs-)Rechte an der jeweiligen Kabelverarbeitungsmaschine 1, 1', 2, 2' haben. So kann es z.B. Benutzer 20 mit einfachen Rechten geben. Diese können nur auf vorgegebene Kabelverarbeitungsmaschinen 1, 1', 2, 2' zugreifen und/oder nur einfache Änderungen an den Produktionsparametern vornehmen und/oder nur Fehlermeldungen mit geringer Eingriffsintensität quittieren. Die Zugriffsrechte der Maschinenbediener bzw. Benutzer können eingeschränkt werden, um beispielweise zu verhindern, dass zu wenig qualifizierte Bediener bzw. Benutzer die Produktionsparameter verstellen können. Wird dies trotzdem gemacht, indem beispielsweise die entsprechenden Passwörter unberechtigterweise weitergegeben werden, kann dies ebenfalls zu schlecht eingestellten Kabelverarbeitungsmaschinen führen.

Zudem kann es Benutzer 21 mit besonderen bzw. erweiterten (Zugriffs-/Änderungs- )Rechten geben, z.B. einen Schichtführer. Dieser kann auf alle Kabelverarbeitungsmaschinen 1, 1', 2, 2' zugreifen und (fast) alle Parameter und/oder Daten ändern.

Wenn eine Fehlermeldung an einer der Kabelverarbeitungsmaschinen 1, 1', 2, 2' auftritt, wird diese an den Steuerungsserver 4 übersandt, von diesem empfangen und in der zentralen Datenbank 6 gespeichert. Je nach Dringlichkeit kann der Steuerungsserver 4 einen Fehlerhinweis und/oder einen Warnhinweis basierend auf der Fehlermeldung an ein stationäres Endgerät 8 und/oder ein mobiles Endgerät 9 senden. Das mobile Endgerät 9 kann z.B. von dem Benutzer 21 mit erweiterten Rechten mitgeführt werden, so dass er unabhängig von seinem Standort schnell über die Fehlermeldung informiert wird.

Die Kabelverarbeitungsmaschinen 1, 1', 2, 2' können Kabelverarbeitungsstartzeiten und/oder Kabelverarbeitungsendzeiten von Produktionslosen der jeweiligen Kabelverarbeitungsmaschine 1, 1', 2, 2' zu dem Steuerungsserver 4 senden. Hierdurch kann festgestellt werden, wie lange die Kabelverarbeitungsmaschine 1, 1', 2, 2' für die jeweilige Verarbeitung des Kabels benötigt hat.

Wenn beispielsweise festgestellt wird, dass eine Kabelverarbeitungsmaschine 1, 1', 2, 2' länger als die durchschnittliche Zeit (berechnet anhand der anderen Kabelverarbeitungsmaschinen 1, 1', 2, 2') für die Verarbeitung einer bestimmten Art benötigt, so kann ein entsprechender Warnhinweis gesendet werden. Hierdurch können die entsprechende Kabelverarbeitungsmaschine 1, 1', 2, 2' bzw. die Einstellungen bzw.

Parameter der entsprechenden Kabelverarbeitungsmaschine 1, 1', 2, 2' untersucht werden, um herauszufinden, warum diese Kabelverarbeitungsmaschine 1, 1', 2, 2' langsamer arbeitet als die anderen Kabelverarbeitungsmaschinen 1, 1', 2, 2'. Abweichungen innerhalb eines Toleranzintervalls um den durchschnittlichen Wert können toleriert werden. Wenn z.B. die Abweichung mehr als ca. 15% oder mehr als ca. 20% beträgt, kann festgestellt werden, dass diese Kabelverarbeitungsmaschine 1, 1', 2, 2' ein Problem aufweist, so dass näher untersucht werden kann, woran es liegt.

Der Steuerungsserver 4 kann ein virtueller Server oder ein dedizierter Server sein.

Die Kabelverarbeitungsmaschine 1, 1', 2, 2' kann z.B. eine Crimpmaschine mit Stempel und Amboss sein, wobei ein Ende oder beide Enden des Kabels mit einem Crimpkontakt vercrimpt wird. Es ist auch möglich, dass die Kabelverarbeitungsmaschinen 1, 1', 2, 2' mehrere Arbeitsstationen aufweisen, an denen die Kabel unterschiedlich verarbeitet werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 1,1': Kabelverarbeitungsmaschine eines ersten Typs
- 2, 2': Kabelverarbeitungsmaschine eines zweiten Typs
- 3, 3', 3", 3‴: Lokale Datenbank einer Kabelverarbeitungsmaschine
- 4: Steuerungsserver
- 5, 5', 5": Vermittlungsgerät
- 6: zentrale Datenbank
- 7: Software des Steuerungsservers
- 8: stationäres Endgerät
- 9: mobiles Endgerät
- 10: Überwachungssystem
- 20: einfacher Benutzer
- 21: Benutzer mit besonderen Rechten
- 30, 30', 30": Kommunikation Kabelverarbeitungsmaschine-Steuerungsserver
- 31: Kommunikation Steuerungsserver-stationäres Endgerät
- 32: Push-Nachricht

## Patentansprüche

1. Computerimplementiertes Verfahren zum Überwachen von mehreren Kabelverarbeitungsmaschinen (1, 1', 2, 2') zum Verarbeiten von Kabeln, wobei das Verfahren folgende Schritte umfasst:
Senden von Produktionsparametern von einer Kabelverarbeitungsmaschine (1, 1', 2, 2') oder mehreren Kabelverarbeitungsmaschinen (1, 1', 2, 2') zu einem Steuerungsserver (4) mit einer zentralen Datenbank (6), wobei die Produktionsparameter Einstellungen der Kabelverarbeitungsmaschine (1, 1', 2, 2') für die Verarbeitung der Kabel durch die jeweilige Kabelverarbeitungsmaschine (1, 1', 2, 2') umfassen; und
Empfangen der Produktionsparameter durch den Steuerungsserver (4);
Speichern der Produktionsparameter in der zentralen Datenbank (6).

2. Verfahren nach Anspruch 1, wobei
das Verfahren ferner folgende Schritte umfasst:
Senden von Fehlermeldungen von einer oder mehreren der Kabelverarbeitungsmaschinen (1, 1', 2, 2') zu dem Steuerungsserver (4);
Empfangen der Fehlermeldungen durch den Steuerungsserver (4); und
Speichern der Fehlermeldungen in der zentralen Datenbank (6).

3. Verfahren nach Anspruch 1 oder 2, wobei
das Verfahren ferner folgende Schritte umfasst:
Senden von Fertigungsdaten von dem Steuerungsserver (4) zu einer Kabelverarbeitungsmaschine (1, 1', 2, 2') oder mehreren Kabelverarbeitungsmaschinen (1, 1', 2, 2'), wobei die Fertigungsdaten die Art des zu verarbeitenden Kabels und/oder die zu verarbeitende Stückzahl an Kabeln,
insbesondere zudem die Losgröße, umfassen;
Speichern der gesendeten Fertigungsdaten in der zentralen Datenbank (6); und
Empfangen und Verarbeiten der Fertigungsdaten durch die jeweilige Kabelverarbeitungsmaschine (1, 1', 2, 2').

4. Verfahren nach einem der vorhergehenden Ansprüche, wobei das Verfahren ferner folgende Schritte umfasst:
Senden von Fertigungsdaten von einer Kabelverarbeitungsmaschine (1, 1', 2, 2') zu dem Steuerungsserver (4), wobei die Fertigungsdaten die Art des zu verarbeitenden Kabels und/oder die zu verarbeitende Stückzahl an Kabeln,
insbesondere zudem die Losgröße, umfassen;
Empfangen der Fertigungsdaten durch die den Steuerungsserver (4); und
Speichern der vom Steuerungsserver (4) empfangenen Fertigungsdaten in der zentralen Datenbank (6).

5. Verfahren nach einem der vorhergehenden Ansprüche, wobei das Verfahren ferner folgende Schritte umfasst:
Senden von Qualitätsdaten und/oder Qualitätsparameter von einer oder mehreren Kabelverarbeitungsmaschinen (1, 1', 2, 2') zu dem Steuerungsserver (4), wobei die Qualitätsdaten Informationen über die Qualität der verarbeiteten Kabel umfassen und/oder wobei die Qualitätsparameter Einstellungen für das Feststellen der Qualität der verarbeiteten Kabel umfassen; und
Empfangen der Qualitätsdaten und/oder Qualitätsparameter durch den Steuerungsserver (4) und Speichern der Qualitätsdaten und/oder Qualitätsparameter in der zentralen Datenbank (6).

6. Verfahren nach einem der vorhergehenden Ansprüche, wobei das Verfahren ferner folgende Schritte umfasst:
Senden von Anmeldedaten und/oder Abmeldedaten von Benutzern (20, 21) an der jeweiligen Kabelverarbeitungsmaschine (1, 1', 2, 2') von einer Kabelverarbeitungsmaschine (1, 1', 2, 2') oder mehreren Kabelverarbeitungsmaschinen (1, 1', 2, 2') zu dem Steuerungsserver (4), wobei insbesondere die Anmeldedaten und/oder Abmeldedaten Uhrzeiten des Anmeldens und/oder Abmeldens von Benutzern (20, 21) an der jeweiligen Kabelverarbeitungsmaschine (1, 1', 2, 2') umfassen; und
Speichern der Anmeldedaten und/oder Abmeldedaten in der zentralen Datenbank (6).

7. Verfahren nach einem der vorhergehenden Ansprüche, wobei das Verfahren ferner folgenden Schritt umfasst:
Senden einer Fehlermeldung und/oder einer Warnmeldung von dem Steuerungsserver (4) an einen Überwachungscomputer und/oder an ein Endgerät (8, 9) eines Benutzers (20, 21) der Kabelverarbeitungsmaschine (1, 1', 2, 2'), insbesondere eines Benutzers (20, 21) mit besonderen Rechten an der jeweiligen Kabelverarbeitungsmaschine (1, 1', 2, 2').

8. Verfahren nach einem der vorhergehenden Ansprüche, wobei die Kabelverarbeitungsmaschinen (1, 1', 2, 2') zueinander unterschiedliche Arten von Kabelverarbeitungsmaschinen (1, 1', 2, 2') umfassen,
wobei die Kabelverarbeitungsmaschinen (1, 1', 2, 2') der gleichen Art jeweils in einer Gruppe zusammengefasst werden,
wobei der Steuerungsserver (4) jeweils die gleichen Daten und/oder Parameter an die Kabelverarbeitungsmaschinen (1, 1', 2, 2') der jeweiligen Gruppe sendet.

9. Verfahren nach einem der vorhergehenden Ansprüche, wobei
die Kabelverarbeitungsmaschinen (1, 1', 2, 2') jeweils eine lokale Datenbank (3, 3', 3", 3‴) aufweisen,
wobei Daten und/oder Parameter zwischen den Kabelverarbeitungsmaschinen (1, 1', 2, 2') und dem Steuerungsserver (4) derart ausgetauscht werden, dass die zentrale Datenbank (6) jeweils eine Kopie der lokalen Datenbanken (3, 3', 3", 3‴) der Kabelverarbeitungsmaschinen (1, 1', 2, 2') aufweist.

10. Verfahren nach einem der vorhergehenden Ansprüche, wobei das Verfahren ferner folgende Schritte umfasst:
Senden von Kabelverarbeitungsstartzeiten und/oder Kabelverarbeitungsendzeiten von Produktionslosen der jeweiligen Kabelverarbeitungsmaschine (1, 1', 2, 2') zu dem Steuerungsserver (4);
Empfangen der Kabelverarbeitungsstartzeiten und/oder Kabelverarbeitungsendzeiten durch den Steuerungsserver (4); und
Speichern der Kabelverarbeitungsstartzeiten und/oder Kabelverarbeitungsendzeiten in der zentralen Datenbank (6).

11. Verfahren nach einem der vorhergehenden Ansprüche, wobei das Verfahren ferner folgende Schritte umfasst:
Senden von Produktionsparameter von dem Steuerungsserver (4) zu der einen Kabelverarbeitungsmaschine (1, 1', 2, 2') oder den mehreren Kabelverarbeitungsmaschinen (1, 1', 2, 2');
Empfangen und Übernehmen der Produktionsparameter durch die Kabelverarbeitungsmaschine (1, 1', 2, 2') oder die Kabelverarbeitungsmaschinen (1, 1', 2, 2'); und
Speichern der gesendeten Produktionsparameter in der zentralen Datenbank (6).

12. Verfahren nach einem der vorhergehenden Ansprüche, wobei das Verfahren ferner folgenden Schritt umfasst:
Bereitstellen eines Webservices, wobei der Webservice zum
- Darstellen von Gruppen der Kabelverarbeitungsmaschinen (1, 1', 2, 2') und/oder Definieren von Gruppen von Kabelverarbeitungsmaschinen (1, 1', 2, 2'),
- Verwalten von Benutzern (20, 21) der Kabelverarbeitungsmaschinen (1, 1', 2, 2'), insbesondere mit dem jeweiligen Benutzerlevel,
- Darstellen und/oder Verändern der Fertigungsdaten der Kabelverarbeitungsmaschinen (1, 1', 2, 2') und/oder Verteilen von Artikeldefinitionen vom Steuerungsserver (4) an die Kabelverarbeitungsmaschinen (1, 1', 2, 2'),
- Darstellen und/oder Vergleichen der Produktionsparameter einer bestimmten Gruppe von Kabelverarbeitungsmaschinen (1, 1', 2, 2'),
- Definieren und Abspeichern von Regeln zum Darstellen, Vergleichen, Filtern und/oder Synchronisieren der in der zentralen Datenbank (6) vorhandenen Daten,
- statistischen Auswerten der Fertigungsdaten, Produktionsparameter, weiterer Daten und/oder Fehlermeldungen der zentralen Datenbank (6),
und/oder
- Definieren von Ereignissen und/oder Abweichungen von Daten, die eine Fehlermeldung und/oder einen Warnhinweis erzeugen ausgebildet ist.

13. Überwachungssystem (10) zum Überwachen von mehreren Kabelverarbeitungsmaschinen (1, 1', 2, 2'), wobei das Überwachungssystem (10) folgendes umfasst:
mehrere Kabelverarbeitungsmaschinen (1, 1', 2, 2') zum Verarbeiten von Kabeln, und
einen Steuerungsserver (4) zum Steuern und Überwachen der Kabelverarbeitungsmaschinen (1, 1', 2, 2'), wobei der Steuerungsserver (4) eine zentrale Datenbank (6) umfasst,
wobei die Kabelverarbeitungsmaschinen (1, 1', 2, 2') zum Senden von Produktionsparametern zu dem Steuerungsserver (4) ausgebildet sind, wobei die Produktionsparameter Einstellungen der Kabelverarbeitungsmaschine (1, 1', 2, 2') für die Verarbeitung der Kabel durch die jeweilige Kabelverarbeitungsmaschine (1, 1', 2, 2') umfassen,
wobei der Steuerungsserver (4) zum Empfangen der Produktionsparameter und Speichern der Produktionsparameter in der zentralen Datenbank (6) ausgebildet ist.

14. Uberwachungssystem (10) nach Anspruch 13 , wobei die Kabelverarbeitungsmaschinen (1, 1', 2, 2') zum Senden von Fehlermeldungen zu dem Steuerungsserver (4) ausgebildet sind, und wobei der Steuerungsserver (4) zum Empfangen der Fehlermeldungen und Speichern der Fehlermeldungen in der zentralen Datenbank (6) ausgebildet ist

15. Uberwachungssystem (10) nach Anspruch 13 oder 14, wobei
die Kabelverarbeitungsmaschinen (1, 1', 2, 2') zum Senden von Qualitätsdaten und/oder Qualitätsparametern zu dem Steuerungsserver (4) ausgebildet sind, wobei die Qualitätsdaten Informationen über die Qualität der verarbeiteten Kabel umfassen und/oder wobei die Qualitätsparameter Einstellungen für das Feststellen der Qualität der verarbeiteten Kabel umfassen,
und wobei der Steuerungsserver (4) zum Empfangen der Qualitätsdaten und/oder Qualitätsparametern und Speichern der Qualitätsdaten und/oder Qualitätsparameter in der zentralen Datenbank (6) ausgebildet ist.

16. Überwachungssystem (10) nach einem der Ansprüche 13-15, wobei
die Kabelverarbeitungsmaschinen (1, 1', 2, 2') jeweils eine lokale Datenbank (3, 3', 3", 3‴) aufweisen,
und wobei die zentrale Datenbank (6) jeweils eine Kopie der lokalen Datenbanken (3, 3', 3", 3‴) der Kabelverarbeitungsmaschinen (1, 1', 2, 2') aufweist.

17. Überwachungssystem (10) nach einem der Ansprüche 13-16 , wobei das Überwachungssystem (10) ferner stationäre und/oder mobile Endgeräte (8, 9) aufweist, wobei der Steuerungsserver (4) zum Senden von Fehlermeldungen und/oder Statistiken über die Qualitätsdaten an die Endgeräte (8, 9) ausgebildet ist.

18. Überwachungssystem (10) nach einem der Ansprüche 13-17, wobei das Überwachungssystem (10) zum Bereitstellen eines Webservices ausgebildet ist, wobei der Webservice zum
- Darstellen von Gruppen der Kabelverarbeitungsmaschinen (1, 1', 2, 2') und/oder Definieren von Gruppen von Kabelverarbeitungsmaschinen (1, 1', 2, 2'),
- Verwalten von Benutzern (20, 21) der Kabelverarbeitungsmaschinen (1, 1', 2, 2'), insbesondere mit dem jeweiligen Benutzerlevel,
- Darstellen und/oder Verändern der Fertigungsdaten der Kabelverarbeitungsmaschinen (1, 1', 2, 2') und/oder Verteilen von Artikeldefinitionen vom Steuerungsserver (4) an die Kabelverarbeitungsmaschinen (1, 1', 2, 2'),
- Darstellen und/oder Vergleichen der Produktionsparameter einer bestimmten Gruppe von Kabelverarbeitungsmaschinen (1, 1', 2, 2'),
- Definieren und Abspeichern von Regeln zum Darstellen, Vergleichen, Filtern und/oder Synchronisieren der in der zentralen Datenbank (6) vorhandenen Daten,
- statistischen Auswerten der Fertigungsdaten, Produktionsparameter, weiterer Daten und/oder Fehlermeldungen der zentralen Datenbank (6),
und/oder
- Definieren von Ereignissen und/oder Abweichungen von Daten, die eine Fehlermeldung und/oder einen Warnhinweis erzeugen ausgebildet ist.

## Claims

1. Computer-implemented method for the monitoring of a plurality of cable-processing machines (1, 1', 2, 2') for the processing of cables, wherein the method comprises the following steps:
transmission of production parameters from a cable-processing machine (1, 1', 2, 2'), or a plurality of cable-processing machines (1, 1', 2, 2') to a control server (4) with a central database (6), wherein the production parameters comprise settings for the cable-processing machine (1, 1', 2, 2') for the processing of the cables by the cable-processing machine in question (1, 1', 2, 2'); and
reception of the production parameters by the control server (4);
storage of the production parameters in the central database (6).

2. Method according to Claim 1, wherein the method further comprises the following steps:
transmission of fault messages from one or a plurality of the cable-processing machines (1, 1', 2, 2') to the control server (4);
reception of the fault messages by the control server (4); and
storage of the fault messages in the central database (6).

3. Method according to Claim 1 or 2, wherein the method further comprises the following steps:
transmission of production data from the control server (4) to a cable-processing machine (1, 1', 2, 2') or a plurality of cable-processing machines (1, 1', 2, 2'), wherein the production data comprise the type of cable to be processed, and/or the number of cables to be processed, in particular also the batch size;
storage of the transmitted production data in the central database (6); and
reception and processing of the production data by the cable-processing machine in question (1, 1', 2, 2').

4. Method according to one of the preceding claims, wherein the method further comprises the following steps:
transmission of production data from a cable-processing machine (1, 1', 2, 2') to the control server (4), wherein the production data comprise the type of cable to be processed,
and/or the number of cables to be processed, in particular also the batch size;
reception of the production data by the control server (4); and
storage of the production data received by the control server (4) in the central database (6).

5. Method according to one of the preceding claims, wherein the method further comprises the following steps:
transmission of quality data and/or quality parameters from one or a plurality of cable-processing machines (1, 1', 2, 2') to the control server (4), wherein the quality data comprise information concerning the quality of the processed cables, and/or wherein the quality parameters comprise settings for the determination of the quality of the processed cables; and
reception of the quality data and/or quality parameters by the control server (4), and storage of the quality data and/or quality parameters in the central database (6).

6. Method according to one of the preceding claims, wherein the method further comprises the following steps:
transmission of log-on data and/or log-off data of users (20, 21) on the cable-processing machine in question (1, 1', 2, 2'), from one cable-processing machine (1, 1', 2, 2') or a plurality of cable-processing machines (1, 1', 2, 2') to the control server (4), wherein in particular the log-on data and/or log-off data comprise times of the log-ons and/or log-offs of users (20, 21) on the cable-processing machine in question (1, 1', 2, 2'); and
storage of the log-on data and/or log-off data in the central database (6).

7. Method according to one of the preceding claims, wherein the method further comprises the following step:
transmission of a fault message and/or a warning message from the control server (4) to a monitoring computer, and/or to a terminal device (8, 9) of a user (20, 21) of the cable-processing machine (1, 1', 2, 2'), in particular a user (20, 21) with special rights on the cable-processing machine in question (1, 1', 2, 2').

8. Method according to one of the preceding claims, wherein
the cable-processing machines (1, 1', 2, 2') comprise mutually different types of cable-processing machines (1, 1', 2, 2'), wherein
the cable-processing machines (1, 1', 2, 2') of the same type are in each case assembled into a group, wherein
the control server (4) transmits in each case the same data and/or parameters to the cable-processing machines (1, 1', 2, 2') of the respective group.

9. Method according to one of the preceding claims, wherein
the cable-processing machines (1, 1', 2, 2') in each case have a local database (3, 3', 3", 3‴), wherein
data and/or parameters are exchanged between the cable-processing machines (1, 1', 2, 2') and the control server (4), such that the central database (6) has a copy of each of the local databases (3, 3', 3", 3‴) of the cable-processing machines (1, 1', 2, 2').

10. Method according to one of the preceding claims, wherein the method further comprises the following steps:
transmission of cable-processing start times and/or cable-processing end times of production batches of the cable-processing machine in question (1, 1', 2, 2') to the control server (4);
reception of the cable-processing start times and/or cable-processing end times by the control server (4); and
storage of the cable-processing start times and/or cable-processing end times in the central database (6).

11. Method according to one of the preceding claims, wherein the method further comprises the following steps:
transmission of production parameters from the control server (4) to the one cable-processing machine (1, 1', 2, 2'), or to the plurality of cable-processing machines (1, 1', 2, 2');
reception and adoption of the production data by the cable-processing machine (1, 1', 2, 2'), or the cable-processing machines (1, 1', 2, 2'); and
storage of the transmitted production parameters in the central database (6).

12. Method according to one of the preceding claims, wherein the method further comprises the following step:
provision of a web service, wherein the web service is designed for the:
- representation of groups of the cable-processing machines (1, 1', 2, 2'), and/or definition of groups of cable-processing machines (1, 1', 2, 2'),
- management of users (20, 21) of the cable-processing machines (1, 1', 2, 2'), in particular with the respective user level,
- representation and/or alteration of the production data of the cable-processing machines (1, 1', 2, 2'), and/or distribution of article definitions from the control server (4) to the cable-processing machines (1, 1', 2, 2'),
- representation and/or comparison of the production parameters of a specific group of cable-processing machines (1, 1', 2, 2'),
- definition and storage of rules for the representation, comparison, filtering and/or synchronisation of the data available in the central database (6),
- statistical evaluation of the production data, production parameters, other data and/or fault messages of the central database (6),
and/or
- definition of events and/or data deviations, which generate a fault message and/or a warning message.

13. Monitoring system (10) for the monitoring of a plurality of cable-processing machines (1, 1', 2, 2'), wherein the monitoring system (10) comprises the following:
a plurality of cable-processing machines (1, 1', 2, 2') for the processing of cables, and
a control server (4) for the control and monitoring of the cable-processing machines (1, 1', 2, 2'), wherein
the control server (4) comprises a central database (6), wherein
the cable-processing machines (1, 1', 2, 2') are designed for the transmission of production parameters to the control server (4), wherein
the production parameters comprise settings for the cable-processing machine (1, 1', 2, 2'), for the processing of the cables by the cable-processing machine in question (1, 1', 2, 2'), wherein
the control server (4) is designed for the reception of the production parameters and the storage of the production parameters in the central database (6).

14. Monitoring system (10) according to Claim 13, wherein
the cable-processing machines (1, 1', 2, 2') are designed for the transmission of fault messages to the control server (4), and wherein
the control server (4) is designed for the reception of the fault messages and the storage of the fault messages in the central database (6).

15. Monitoring system (10) according to Claim 13 or 14, wherein
the cable-processing machines (1, 1', 2, 2') are designed for the transmission of quality data and/or quality parameters to the control server (4), wherein the quality data comprise information concerning the quality of the processed cables, and/or wherein the quality parameters comprise settings for the determination of the quality of the processed cables; and wherein
the control server (4) is designed for the reception of the quality data and/or quality parameters, and the storage of the quality data and/or quality parameters in the central database (6).

16. Monitoring system (10) according to one of the Claims 13-15, wherein
the cable-processing machines (1, 1', 2, 2') in each case have a local database (3, 3', 3", 3‴), and wherein
the central database (6) has a copy of each of the local databases (3, 3', 3", 3‴) of the cable-processing machines (1, 1', 2, 2').

17. Monitoring system (10) according to one of the Claims 13-16, wherein
the monitoring system (10) also has stationary and/or mobile terminal devices (8, 9), wherein the control server (4) is designed to transmit fault messages and/or statistics on the quality data to the terminal devices (8, 9).

18. Monitoring system (10) according to one of the Claims 13-17, wherein
the monitoring system (10) is designed to provide a web service, wherein the web service is designed for the:
- representation of groups of the cable-processing machines (1, 1', 2, 2') and/or definition of groups of cable-processing machines (1, 1', 2, 2'),
- management of users (20, 21) of the cable-processing machines (1, 1', 2, 2'), in particular with the respective user level,
- representation and/or alteration of the production data of the cable-processing machines (1, 1', 2, 2'), and/or distribution of article definitions from the control server (4) to the cable-processing machines (1, 1', 2, 2'),
- representation and/or comparison of the production parameters of a specific group of cable-processing machines (1, 1', 2, 2'),
- definition and storage of rules for the representation, comparison, filtering and/or synchronisation of the data available in the central database (6),
- statistical evaluation of the production data, production parameters, other data, and/or fault messages of the central database (6),
and/or
- definition of events and/or data deviations, which generate a fault message and/or a warning message.

## Revendications

1. Procédé mis en œuvre par ordinateur, destiné à superviser plusieurs machines d'usinage de câbles (1, 1', 2, 2') pour l'usinage de câbles, le procédé comprenant les étapes suivantes, consistant dans :
l'envoi des paramètres de production d'une machine d'usinage de câbles (1, 1', 2, 2') ou de plusieurs machines d'usinage de câbles (1, 1', 2, 2') vers un serveur de commande (4) doté d'une base de données (6) centralisée, les paramètres de production comprenant des réglages de la machine d'usinage de câbles (1, 1', 2, 2') pour l'usinage des câbles par la machine d'usinage de câbles (1, 1', 2, 2') concernée ; et
la réception des paramètres de production par le serveur de commande (4) ;
la mémorisation des paramètres de production dans la base de données (6) centralisée.

2. Procédé selon la revendication 1,
le procédé comprenant par ailleurs les étapes suivantes, consistant dans :
l'émission de messages d'erreur par une ou par plusieurs des machines d'usinage de câbles (1, 1', 2, 2') vers le serveur de commande (4) ;
la réception des messages d'erreur par le serveur de commande (4) ; et
la mémorisation des messages d'erreur dans la base de données (6) centralisée.

3. Procédé selon la revendication 1 ou 2,
le procédé comprenant par ailleurs les étapes suivantes, consistant dans :
l'envoi de données de fabrication par le serveur de commande (4) vers une machine d'usinage de câbles (1, 1', 2, 2') ou vers plusieurs machines d'usinage de câbles (1, 1', 2, 2'), les données de fabrication comprenant le type de câble qui doit être usiné et / ou la quantité de câbles à usiner, notamment par ailleurs la taille des lots ;
la mémorisation dans la base de données (6) centralisée des données de fabrication envoyées ; et
la réception et le traitement des données de fabrication par la machine d'usinage de câbles (1, 1', 2, 2') concernée.

4. Procédé selon l'une quelconque des revendications précédentes,
le procédé comprenant par ailleurs les étapes suivantes, consistant dans :
l'envoi de données de fabrication par une machine d'usinage de câbles (1, 1', 2, 2') vers le serveur de commande (4), les données de fabrication comprenant le type de câble qui doit être usiné et / ou la quantité de câbles à usiner, notamment par ailleurs la taille des lots ;
la réception des données de fabrication par le serveur de commande (4) ; et
la mémorisation dans la base de données (6) centralisée des données de fabrication réceptionnées par le serveur de commande (4).

5. Procédé selon l'une quelconque des revendications précédentes,
le procédé comprenant par ailleurs les étapes suivantes, consistant dans :
l'envoi de données de qualité et / ou de paramètres de qualité par une ou par plusieurs machines d'usinage de câbles (1, 1', 2, 2') vers le serveur de commande (4),
les données de qualité comprenant des informations sur la qualité des câbles usinés et / ou les paramètres de qualité comprenant des réglages pour la constatation de la qualité des câbles usinés ; et
la réception des données de qualité et / ou des paramètres de qualité par le serveur de commande (4) et la mémorisation des données de qualité et / ou des paramètres de qualité dans la base de données (6) centralisée.

6. Procédé selon l'une quelconque des revendications précédentes,
le procédé comprenant par ailleurs les étapes suivantes, consistant dans :
l'envoi de données de connexion et / ou de données de déconnexion d'utilisateurs (20, 21) à la machine d'usinage de câbles (1, 1', 2, 2') concernée pour une machine d'usinage de câbles (1, 1', 2, 2') ou plusieurs machines d'usinage de câbles (1, 1', 2, 2') vers le serveur de commande (4), notamment les données de connexion et / ou les données de déconnexion comprenant des heures de connexion et / ou de déconnexion d'utilisateurs (20, 21) à la machine d'usinage de câbles (1, 1', 2, 2') concernée ; et
la mémorisation des données de connexion et / ou des données de déconnexion dans la base de données (6) centralisée.

7. Procédé selon l'une quelconque des revendications précédentes,
le procédé comprenant par ailleurs l'étape suivante consistant dans :
l'envoi d'un message d'erreur et / ou d'un message d'avertissement du serveur de commande (4) vers un ordinateur de supervision et / ou vers un terminal (8, 9) d'un utilisateur (20, 21) de la machine d'usinage de câbles (1, 1', 2, 2'), notamment d'un utilisateur (20, 21) disposant de droits particuliers sur la machine d'usinage de câbles (1, 1', 2, 2') concernée.

8. Procédé selon l'une quelconque des revendications précédentes,
les machines d'usinage de câbles (1, 1', 2, 2') comprenant différents types de machines d'usinage de câbles (1, 1', 2, 2'),
les machines d'usinage de câbles (1, 1', 2, 2') du même type étant chaque fois rassemblées en un groupe,
le serveur de commande (4) envoyant chaque fois les mêmes données et / ou paramètres vers les machines d'usinage de câbles (1, 1', 2, 2') du groupe concerné.

9. Procédé selon l'une quelconque des revendications précédentes,
les machines d'usinage de câbles (1, 1', 2, 2') comportant chacune une base de données (3, 3', 3" 3‴) locale,
des données et / ou des paramètres étant échangé(e)s entre les machines d'usinage de câbles (1, 1', 2, 2') et le serveur de commande (4), de telle sorte que la base de données (6) centralisée comporte chaque fois une copie de la base de données (3, 3', 3", 3‴) locale des machines d'usinage de câbles (1, 1', 2, 2').

10. Procédé selon l'une quelconque des revendications précédentes,
le procédé comprenant par ailleurs les étapes suivantes, consistant dans :
l'envoi vers le serveur de commande (4) d'heures de démarrage de l'usinage de câbles et / ou d'heures d'achèvement de l'usinage de câbles pour des lots de production de la machine d'usinage de câbles (1, 1', 2, 2') concernée ;
la réception par le serveur de commande (4) des heures de démarrage de l'usinage de câbles et / ou des heures d'achèvement de l'usinage de câbles ; et
la mémorisation dans la base de données (6) centralisée des heures de démarrage de l'usinage de câbles et / ou des heures d'achèvement de l'usinage de câbles.

11. Procédé selon l'une quelconque des revendications précédentes,
le procédé comprenant par ailleurs les étapes suivantes, consistant dans :
l'envoi de paramètres de production par le serveur de commande (4) vers l'une machine d'usinage de câbles (1, 1', 2, 2') ou vers les plusieurs machines d'usinage de câbles (1, 1', 2, 2') ;
la réception et la prise en charge des paramètres de production par la machine d'usinage de câbles (1, 1', 2, 2') ou par les machines d'usinage de câbles (1, 1', 2, 2') ; et
la mémorisation des paramètres de production envoyés dans la base de données (6) centralisée.

12. Procédé selon l'une quelconque des revendications précédentes,
le procédé comprenant par ailleurs l'étape suivante consistant dans :
la mise à disposition d'un service web, le service web étant conçu pour
- représenter des groupes des machines d'usinage de câbles (1, 1', 2, 2') et / ou définir des groupes de machines d'usinage de câbles (1, 1', 2, 2'),
- gérer des utilisateurs (20, 21) des machines d'usinage de câbles (1, 1', 2, 2'), disposant notamment du niveau d'utilisateur concerné,
- représenter et / ou modifier des données de fabrication des machines d'usinage de câbles (1, 1', 2, 2') et / ou distribuer des définitions d'articles du serveur de commande (4) vers les machines d'usinage de câbles (1, 1', 2, 2'),
- représenter et / ou comparer des paramètres de production d'un certain groupe de machines d'usinage de câbles (1, 1', 2, 2'),
- définir et sauvegarder des règles pour la représentation, la comparaison, le filtrage et / ou la synchronisation des données présentes dans la base de données (6) centralisée,
- évaluer statistiquement les données de fabrication, les paramètres de production, d'autres données et / ou messages d'erreur de la base de données (6) centralisée, et / ou
- définir des événements et / ou des divergences de données générant un message d'erreur et / ou un avertissement.

13. Système de supervision (10), destiné à superviser plusieurs machines d'usinage de câbles (1, 1', 2, 2'),
le système de supervision (10) comprenant ce qui suit :
plusieurs machines d'usinage de câbles (1, 1', 2, 2'), destinées à usiner des câbles, et
un serveur de commande (4), destiné à commander et à superviser les machines d'usinage de câbles (1, 1', 2, 2'), le serveur de commande (4) comprenant une base de données (6) centralisée,
les machines d'usinage de câbles (1, 1', 2, 2') étant conçues pour envoyer des paramètres de production vers le serveur de commande (4), les paramètres de production comprenant des réglages de la machine d'usinage de câbles (1, 1', 2, 2') pour l'usinage des câbles par la machine d'usinage de câbles (1, 1', 2, 2') concernée,
le serveur de commande (4) étant conçu pour réceptionner les paramètres de production et pour mémoriser les paramètres de production dans la base de données (6) centralisée.

14. Système de supervision (10) selon la revendication 13,
les machines d'usinage de câbles (1, 1', 2, 2') étant conçues pour envoyer des messages d'erreur vers le serveur de commande (4),
et le serveur de commande (4) étant conçu pour réceptionner les messages d'erreur et pour mémoriser les messages d'erreur dans la base de données (6) centralisée.

15. Système de supervision (10) selon la revendication 13 ou 14,
les machines d'usinage de câbles (1, 1', 2, 2') étant conçues pour envoyer des données de qualité et / ou des paramètres de qualité vers le serveur de commande (4), les données de qualité comprenant des informations sur la qualité des câbles usinés et / ou les paramètres de qualité comprenant des réglages pour la constatation de la qualité des câbles usinés,
et le serveur de commande (4) étant conçu pour réceptionner les données de qualité et / ou les paramètres de qualité et pour mémoriser les données de qualité et / ou les paramètres de qualité dans la base de données (6) centralisée.

16. Système de supervision (10) selon l'une quelconque des revendications 13 à 15, les machines d'usinage de câbles (1, 1', 2, 2') comprenant chacune une base de données (3, 3' 3" 3‴) locale,
et la base de données (6) centralisée comportant chaque fois une copie de la base de données (3, 3', 3", 3‴) locale des machines d'usinage de câbles (1, 1', 2, 2').

17. Système de supervision (10) selon l'une quelconque des revendications 13 à 16, le système de supervision (10) comportant par ailleurs des terminaux (8, 9) stationnaires et/ ou mobiles, le serveur de commande (4) étant conçu pour envoyer aux terminaux (8, 9) des messages d'erreur et / ou des statistiques concernant les données de qualité.

18. Système de supervision (10) selon l'une quelconque des revendications 13 à 17, le système de supervision (10) étant conçu pour mettre à disposition un service web, le service web étant conçu pour
- représenter des groupes des machines d'usinage de câbles (1, 1', 2, 2') et / ou définir des groupes de machines d'usinage de câbles (1, 1', 2, 2'),
- gérer des utilisateurs (20, 21) des machines d'usinage de câbles (1, 1', 2, 2'), disposant notamment du niveau d'utilisateur concerné,
- représenter et / ou modifier les données de fabrication des machines d'usinage de câbles (1, 1', 2, 2') et / ou distribuer des définitions d'articles du serveur de commande (4) vers les machines d'usinage de câbles (1, 1', 2, 2'),
- représenter et / ou comparer les paramètres de production d'un certain groupe de machines d'usinage de câbles (1, 1', 2, 2'),
- définir et sauvegarder des règles de représentation, de comparaison, de filtrage et / ou de synchronisation des données présentes dans la base de données (6),
- évaluer statistiquement les données de fabrication, les paramètres de production, d'autres données et / ou messages d'erreur de la base de données (6) centralisée, et / ou
- définir des évènements et / ou des divergences de données qui génèrent un message d'erreur et / ou un avertissement.
